(19) Europäisches Patentamt
European Patent Office
Office européen des brevets

(11) EP 0 765 118 B1

(12) **EUROPÄISCHE PATENTSCHRIFT**

(45) Veröffentlichungstag und Bekanntmachung des Hinweises auf die Patenterteilung:
**22.04.1998 Patentblatt 1998/17**

(21) Anmeldenummer: **95923264.6**

(22) Anmeldetag: **08.06.1995**

(51) Int. Cl.[6]: **A01N 47/04**
// (A01N47/04, 37:50)

(86) Internationale Anmeldenummer:
**PCT/EP95/02210**

(87) Internationale Veröffentlichungsnummer:
**WO 95/35033 (28.12.1995 Gazette 1995/55)**

# (54) FUNGIZIDE MISCHUNGEN
FUNGICIDAL MIXTURES
MELANGES FUNGICIDES

(84) Benannte Vertragsstaaten:
**AT BE CH DE DK ES FR GB GR IE IT LI NL PT SE**

(30) Priorität: **17.06.1994 DE 4421041**

(43) Veröffentlichungstag der Anmeldung:
**02.04.1997 Patentblatt 1997/14**

(73) Patentinhaber:
**BASF AKTIENGESELLSCHAFT**
**67056 Ludwigshafen (DE)**

(72) Erfinder:
- **AMMERMANN, Eberhard**
  **D-64646 Heppenheim (DE)**
- **LORENZ, Gisela**
  **D-67434 Hambach (DE)**
- **MAPPES, Dietrich**
  **D-67368 Westheim (DE)**
- **SCHELBERGER, Klaus**
  **D-67161 Gönnheim (DE)**
- **HAMPEL, Manfred**
  **D-67435 Neustadt (DE)**

(56) Entgegenhaltungen:

| | |
|---|---|
| **EP-A- 0 253 213** | **EP-A- 0 254 426** |
| **EP-A- 0 645 088** | **WO-A-95/15083** |
| **GB-A- 2 267 644** | **GB-A- 2 279 568** |

- **RESEARCH DISCLOSURE, Nr. 338, 1992 HAVANT GB, DISCLOSED ANONYMOUSLY 'Disclosure 33893: Mixtures of Fungicides and Insecticides'**
- **CHEMICAL ABSTRACTS, vol. 118, no. 23, 7.Juni 1993 Columbus, Ohio, US; abstract no. 228112, E.AMMERMANN ET AL. 'BAS 490 F - a broad-spectrum fungicide with a new mode of action' & BRIGHTON CROP PROT. CONF.--PESTS DIS., Nr. 1, 1992 Seiten 403-410,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.1/3.4

## Beschreibung

Die vorliegende Erfindung betrifft für alle Vertragsstaaten außer Spanien, Frankreich und Italien eine fungizide Mischung, welche

a) einen Oximethercarbonsäureester der Formel I,

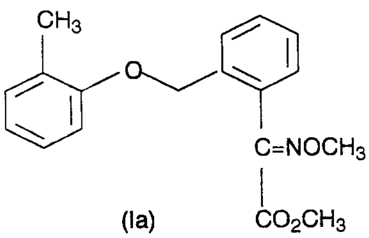
(Ia)

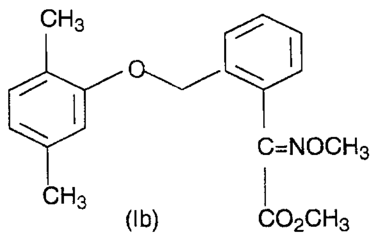
(Ib)

und

b) ein Phthalimidderivat ausgewählt aus der Gruppe der Verbindungen II und III

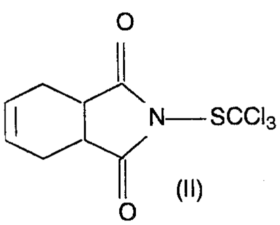
(II)

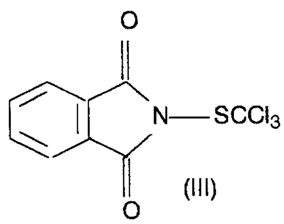
(III)

in einer synergistisch wirksamen Menge enthält.

Für die Vertragsstaaten Spanien, Frankreich und Italien ist der Gegenstand auf diejenigen Mischungen beschränkt, die als Oximethercarbonsäureester die Verbindung Ib enthalten.

Außerdem betrifft die Erfindung Verfahren zur Bekämpfung von Schadpilzen mit Mischungen der Verbindungen I (bzw. Ia oder Ib)und II bzw. der Verbindungen I und III und die Verwendung der Verbindung I, der Verbindung II und der Verbindung III zur Herstellung derartiger Mischungen.

Die Verbindungen der Formel I, ihre Herstellung und ihre Wirkung gegen Schadpilze sind aus der Literatur bekannt (EP-A 253 213).

Außerdem werden in der älteren Anmeldung EP-A 741 970 für die Vertragsstaaten Spanien, Frankreich und Italien synergistische fungizide Mischungen der Verbindung Ia mit den Phthalimidderivaten II und III beschrieben.

Ebenfalls bekannt sind die Phthalimidderivate II und III (US-A 2,553,770; 2,553,771; 2,553,776), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I und der Verbindung II oder der Verbindung III oder bei Anwendung der Verbindung I und der Verbindungen II bzw. der Verbindung III nacheinander Schadpilze besser bekämpfen lassen als mit den Einzelverbindungen.

Die Verbindungen der Formel I können in Bezug auf die C=X -Doppelbindung in der E- oder der Z-Konfiguration (in Bezug auf die Gruppierung Carbonsäurefunktion) vorliegen. Demgemäß können sie in der erfindungsgemäßen Mischung jeweils entweder als reines E- oder oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Bevorzugt setzt man bei der Bereitstellung der Mischungen die reinen Wirkstoffe I und II bzw. III ein, denen man je

nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. I und III bzw. die gleichzeitige gemeinsame oder getrennte Verwendung der Verbindungen I und II bzw. I und III zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II bzw. I und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II bzw. I und III werden üblicherweise in einem Gewichtsverhältnis von 1:1 bis 1:1000, vorzugsweise 1:1 bis 1:500, insbesondere 1:3 bis 1:300 (I:II bzw. III) angewendet.

Die Aufwandmengen der erfindungsgemäßen Mischungen liegen je nach Art des gewünschten Effekts bei 0,02 bis 5 kg/ha, vorzugsweise 0,05 bis 3,5 kg/ha, insbesondere 0,1 bis 3,5 kg/ha. Die Aufwandmengen liegen dabei für die Verbindungen I bei 0,005 bis 0,5 kg/ha, vorzugsweise 0,01 bis 0,5 kg/ha, insbesondere 0,01 bis 0,3 kg/ha. Die Aufwandmengen für die Verbindungen II bzw. die Verbindungen III liegen entsprechend bei 0,1 bis 5 kg/ha, vorzugsweise 0,1 bis 3,5 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 5 g/kg verwendet.

Sofern für Pflanzen pathogene Schadpilze zu bekämpfen sind erfolgt die getrennte oder gemeinsame Applikation der Verbindungen I und II bzw. I und III oder der Mischungen aus den Verbindungen I und II bzw. I und III durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II bzw. I und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II bzw. I oder III oder der Mischung aus den Verbindungen I und II bzw. I und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele,

Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. I oder III bzw. der Mischung aus den Verbindungen I und II bzw. I und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. I oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bzw. I und III bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze

Die fungizide Wirkung der Verbindungen und der Mischungen ließ sich durch folgende Versuche zeigen:

Die Wirkstoffe wurden getrennt oder gemeinsam als 20 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen. Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Wirksamkeit gegen Botrytis cinerea (Grauschimmel)

Paprikasämlinge (Sorte: "Neusiedler Ideal Elite") mit 4-5 Blättern wurden mit der Wirkstoffaufbereitung tropfnaß gespritzt. Nach dem Abtrocknen wurden die Pflanzen mit einer Konidienaufschwemmung des Pilzes *Botrytis cinerea* besprüht und 5 Tage bei 22-24°C bei hoher Luftfeuchtigkeit bewahrt. Die Auswertung erfolgte visuell.

| **Wirkstoff** | **Aufwandmenge [ppm]** | **Wirkungsgrad** | |
|---|---|---|---|
| | | **beobachtet** | **berechnet** |
| -/- | -/- | 0 | |
| **Ia** | 125 | 15 | |
| **III** | 125 | 80 | |
| **Ia + III** | 125 + 125 | 95 | 83 |

## Patentansprüche

**Patentansprüche für folgende Vertragsstaaten : AT, BE, CH, DE, DK, GB, GR, IE, NL, PT, SE**

**1.** Fungizide Mischung, enthaltend

a) einen Oximethercarbonsäureester der Formel I,

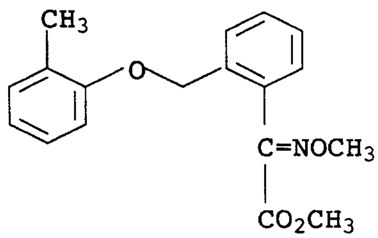

Ia

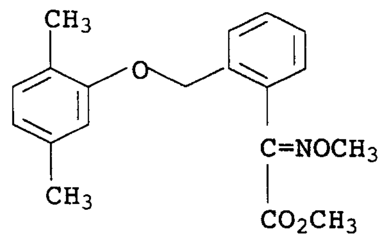

Ib

und

b) ein Phthalimidderivat ausgewählt aus der Gruppe der Verbindungen II und III

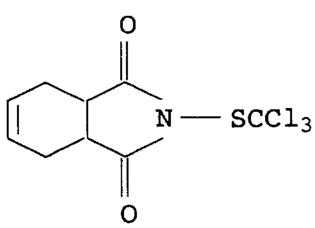

II

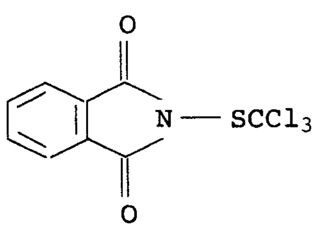

III

in einer synergistisch wirksamen Menge.

**2.** Fungizide Mischung nach Anspruch 1, enthaltend einen Oximethercarbonsäureester der Formel I gemäß Anspruch 1 und das Phthalimidderivat II.

**3.** Fungizide Mischung nach Anspruch 1, enthaltend einen Oximethercarbonsäureester der Formel I gemäß Anspruch 1 und das Phthalimidderivat III.

**4.** Fungizide Mischung nach Anspruch 1, dadurch gekennzeichnet, daß das Gewichtsverhältnis der Verbindung I zu der Verbindung II oder der Verbindung III 1:1 bis 1:1000 beträgt.

**5.** Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel I gemäß Anspruch 1 und der Verbindung der Formel II gemäß Anspruch 1 oder der Verbindung der Formel III gemäß Anspruch 1 behandelt.

**6.** Verfahren nach Anspruch 5, dadurch gekennzeichnet, daß man die Verbindung I gemäß Anspruch 1 und die Verbindung II gemäß Anspruch 1 bzw. die Verbindung III gemäß Anspruch 1 gleichzeitig gemeinsam oder getrennt oder nacheinander ausbringt.

7. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,005 bis 0,5 kg/ha einer Verbindung I gemäß Anspruch 1 behandelt.

8. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,1 bis 5 kg/ha der Verbindung II gemäß Anspruch 1 bzw. der Verbindung III gemäß Anspruch 1 behandelt.

9. Verwendung einer Verbindung I gemäß Anspruch 1 zur Herstellung von fungizid wirksamen synergistischen Mischungen gemäß Anspruch 1.

10. Verwendung der Verbindungen II gemäß Anspruch 1 zur Herstellung von fungizid wirksamen synergistischen Mischungen gemäß Anspruch 1.

11. Verwendung der Verbindungen III gemäß Anspruch 1 zur Herstellung von fungizid wirksamen synergistischen Mischungen gemäß Anspruch 1.

**Patentansprüche für folgende Vertragsstaaten : ES, FR, IT**

1. Fungizide Mischung, enthaltend

a) den Oximethercarbonsäureester der Formel Ib,

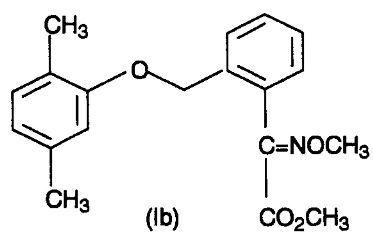

(Ib)

und

b) ein Phthalimidderivat ausgewählt aus der Gruppe der Verbindungen II und III

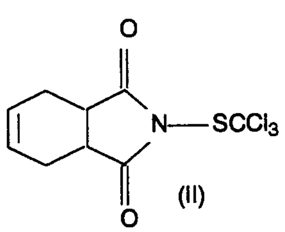

(II)

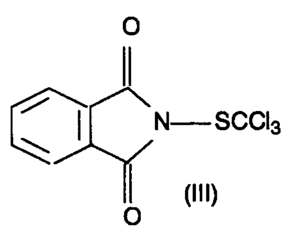

(III)

in einer synergistisch wirksamen Menge.

2. Fungizide Mischung nach Anspruch 1, enthaltend den Oximethercarbonsäureester der Formel Ib gemäß Anspruch 1 und das Phthalimidderivat II.

3. Fungizide Mischung nach Anspruch 1, enthaltend den Oximethercarbonsäureester der Formel Ib gemäß Anspruch 1 und das Phthalimidderivat III.

4. Fungizide Mischung nach Anspruch 1, dadurch gekennzeichnet, daß das Gewichtsverhältnis der Verbindung Ib zu

der Verbindung II oder der Verbindung III 1:1 bis 1:1000 beträgt.

5. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel Ib gemäß Anspruch 1 und der Verbindung der Formel II gemäß Anspruch 1 oder der Verbindung der Formel III gemäß Anspruch 1 behandelt.

6. Verfahren nach Anspruch 5, dadurch gekennzeichnet, daß man die Verbindung Ib gemäß Anspruch 1 und die Verbindung II gemäß Anspruch 1 bzw. die Verbindung III gemäß Anspruch 1 gleichzeitig gemeinsam oder getrennt oder nacheinander ausbringt.

7. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,005 bis 0,5 kg/ha einer Verbindung Ib gemäß Anspruch 1 behandelt.

8. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,1 bis 5 kg/ha der Verbindung II gemäß Anspruch 1 bzw. der Verbindung III gemäß Anspruch 1 behandelt.

9. Verwendung einer Verbindung Ib gemäß Anspruch 1 zur Herstellung von fungizid wirksamen synergistischen Mischungen gemäß Anspruch 1.

10. Verwendung der Verbindungen II gemäß Anspruch 1 zur Herstellung von fungizid wirksamen synergistischen Mischungen gemäß Anspruch 1.

11. Verwendung der Verbindungen III gemäß Anspruch 1 zur Herstellung von fungizid wirksamen synergistischen Mischungen gemäß Anspruch 1.

**Claims**

**Claims for the following Contracting States : AT, BE, CH, DE, DK, GB, GR, IE, NL, PT, SE**

1. A fungicidal mixture containing

a) an oxime ether carboxylic acid ester of the formula I

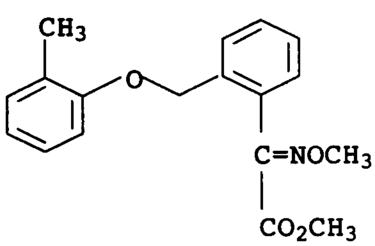

Ia

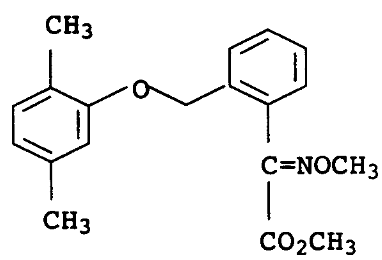

Ib

and

b) a phthalimide derivative selected from the group of compounds II and III

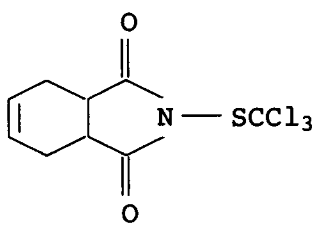

II

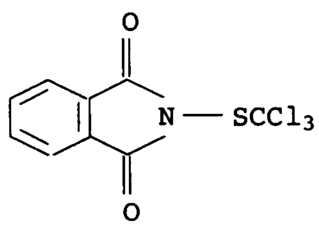

III

in a synergistically active amount.

2. A fungicidal mixture as claimed in claim 1, containing an oxime ether carboxylic acid ester of the formula I as claimed in claim 1 and the phthalimide derivative II.

3. A fungicidal mixture as claimed in claim 1, containing an oxime ether carboxylic acid ester of the formula I as claimed in claim 1 and the phthalimide derivative III.

4. A fungicidal mixture as claimed in claim 1, wherein the weight ratio of the compound I to the compound II or the compound III is from 1:1 to 1:1000.

5. A method of controlling harmful fungi, which comprises treating the harmful fungi, their environment or the plants, seeds, soils, surfaces, materials or spaces to be kept free from them with the compound of the formula I as claimed in claim 1 and the compound of the formula II as claimed in claim 1 or the compound of the formula III as claimed in claim 1.

6. A method as claimed in claim 5, wherein the compound I as claimed in claim 1 and the compound II as claimed in claim 1 or the compound III as claimed in claim 1 are applied simultaneously jointly or separately, or successively.

7. A method as claimed in claim 5, wherein the harmful fungi, their environment or the plants, seeds, soils, surfaces, materials or spaces to be kept free from them are treated with from 0.005 to 0.5 kg/ha of a compound I as claimed in claim 1.

8. A method as claimed in claim 5, wherein the harmful fungi, their environment or the plants, seeds, soils, surfaces, materials or spaces to be kept free from them are treated with from 0.1 to 5 kg/ha of the compound II as claimed in claim 1 or the compound III as claimed in claim 1.

9. The use of a compound I as claimed in claim 1 for the production of fungicidally active synergistic mixtures as claimed in claim 1.

10. The use of the compound II as claimed in claim 1 for the production of fungicidally active synergistic mixtures as claimed in claim 1.

11. The use of the compound III as claimed in claim 1 for the production of fungicidally active synergistic mixtures as claimed in claim 1.

**Claims for the following Contracting States : ES, FR, IT**

1. A fungicidal mixture containing

a) the oxime ether carboxylic acid ester of the formula Ib

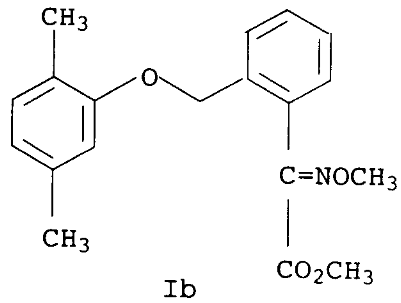

Ib

and

b) a phthalimide derivative selected from the group of compounds II and III

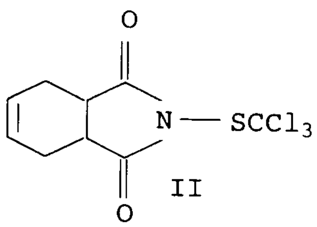

II

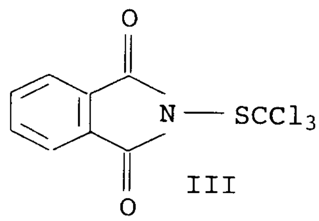

III

in a synergistically active amount.

2. A fungicidal mixture as claimed in claim 1, containing the oxime ether carboxylic acid ester of the formula Ib as claimed in claim 1 and the phthalimide derivative II.

3. A fungicidal mixture as claimed in claim 1, containing the oxime ether carboxylic acid ester of the formula Ib as claimed in claim 1 and the phthalimide derivative III.

4. A fungicidal mixture as claimed in claim 1, wherein the weight ratio of the compound Ib to the compound II or the compound III is from 1:1 to 1:1000.

5. A method of controlling harmful fungi, which comprises treating the harmful fungi, their environment or the plants, seeds, soils, surfaces, materials or spaces to be kept free from them with the compound of the formula Ib as claimed in claim 1 and the compound of the formula II as claimed in claim 1 or the compound of the formula III as claimed in claim 1.

6. A method as claimed in claim 5, wherein the compound Ib as claimed in claim 1 and the compound II as claimed in claim 1 or the compound III as claimed in claim 1 are applied simultaneously jointly or separately, or successively.

7. A method as claimed in claim 5, wherein the harmful fungi, their environment or the plants, seeds, soils, surfaces, materials or spaces to be kept free from them are treated with from 0.005 to 0.5 kg/ha of the compound Ib as claimed in claim 1.

8. A method as claimed in claim 5, wherein the harmful fungi, their environment or the plants, seeds, soils, surfaces, materials or spaces to be kept free from them are treated with from 0.1 to 5 kg/ha of the compound II as claimed in claim 1 or the compound III as claimed in claim 1.

9. The use of the compound Ib as claimed in claim 1 for the production of fungicidally active synergistic mixtures as claimed in claim 1.

**10.** The use of the compound II as claimed in claim 1 for the production of fungicidally active synergistic mixtures as claimed in claim 1.

**11.** The use of the compound III as claimed in claim 1 for the production of fungicidally active synergistic mixtures as claimed in claim 1.

**Revendications**

**Revendications pour les Etats contractants suivants : AT, BE, CH, DE, DK, GB, GR, IE, NL, PT, SE**

**1.** Mélange fongicide contenant en quantité synergique efficace :

a) un ester d'acide oximéther-carboxylique de formule I

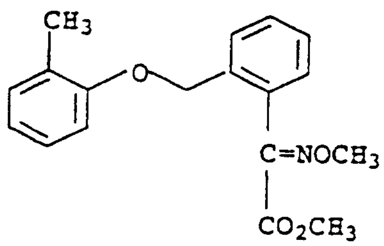

Ia

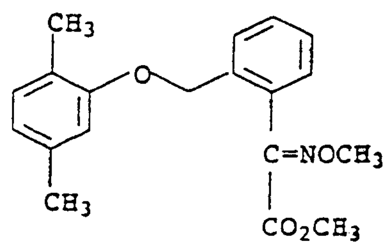

Ib

et

b) un dérivé de phtalimide choisi dans le groupe des composés II et III

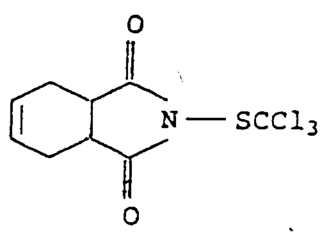

II

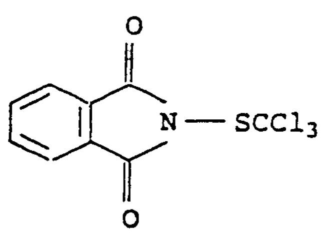

III

**2.** Mélange fongicide selon la revendication 1, contenant un ester d'acide oximéther-carboxylique de formule I selon la revendication 1 et le dérivé du phtalimide II.

**3.** Mélange fongicide selon la revendication 1, contenant un ester d'acide oximéther-carboxylique de formule I selon la revendication 1 et le dérivé du phtalimide III.

**4.** Mélange fongicide selon la revendication 1, caractérisé par le fait que les proportions relatives en poids entre le

composé I et le composé II ou le composé III vont de 1 : 1 à 1 : 1000.

**5.** Procédé pour combattre les mycètes nuisibles, caractérisé par le fait que l'on traite les mycètes, leur habitat ou les végétaux, semences, sol, aires, matériaux ou locaux à protéger contre les mycètes par le composé de formule I selon la revendication 1 et le composé de formule II selon la revendication 1 ou le composé de formule III selon la revendication 1.

**6.** Procédé selon la revendication 5, caractérisé par le fait que l'on applique le composé I selon la revendication 1 et le composé II selon la revendication III selon la revendication 1 simultanément, ensemble ou séparément, ou successivement.

**7.** Procédé selon la revendication 5, caractérisé par le fait que l'on traite les mycètes nuisibles, leur habitat ou les végétaux, semences, sol, aires, matériaux ou locaux qu'on veut protéger contre ces mycètes par 0,005 à 0,5 kg/ha d'un composé I selon la revendication 1.

**8.** Procédé selon la revendication 5, caractérisé par le fait que l'on traite les mycètes nuisibles, leur habitat ou les végétaux, semences, sol, aires, matériaux ou locaux qu'on veut protéger contre les mycètes par 0,1 à 5 kg/ha du composé II selon la revendication 1 ou du composé III selon la revendication 1.

**9.** Utilisation d'un composé I selon la revendication 1 pour la préparation des mélanges à activité fongicide synergique selon la revendication 1.

**10.** Utilisation du composé II selon la revendication 1 pour la préparation des mélanges à activité fongicide synergique selon la revendication 1.

**11.** Utilisation du composé III selon la revendication 1 pour la préparation des mélanges à activité fongicide synergique selon la revendication 1.

**Revendications pour les Etats contractants suivants : ES, FR, IT**

**1.** Mélange fongicide contenant en quantité synergique efficace :

a) un ester d'acide oximéther-carboxylique de formule Ib,

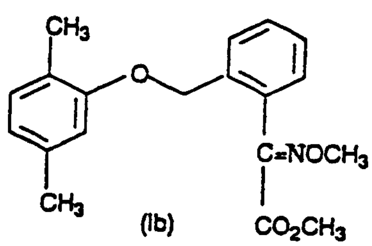

(Ib)

et

b) un dérivé de phtalimide choisi dans le groupe des composés II et III

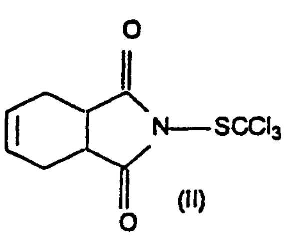

(II)

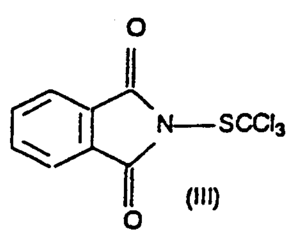

(III)

2. Mélange fongicide selon la revendication 1, contenant l'ester d'acide oximéther-carboxylique de formule Ib selon la revendication 1 et le dérivé du phtalimide II.

3. Mélange fongicide selon la revendication 1, contenant un ester d'acide oximéther-carboxylique de formule Ib selon la revendication 1 et le dérivé du phtalimide III.

4. Mélange fongicide selon la revendication 1, caractérisé par le fait que les proportions relatives en poids entre le composé Ib et le composé II ou le composé III vont de 1 : 1 à 1 : 1000.

5. Procédé pour combattre les mycètes nuisibles, caractérisé par le fait que l'on traite les mycètes, leur habitat ou les végétaux, semences, sol, aires, matériaux ou locaux à protéger contre ces mycètes par le composé de formule Ib selon la revendication 1 et le composé de formule II selon la revendication 1 ou le composé de formule III selon la revendication 1.

6. Procédé selon la revendication 5, caractérisé par le fait que l'on applique le composé Ib selon la revendication 1 et le composé II selon la revendication 1 ou le composé III selon la revendication 1, simultanément, ensemble ou séparément, ou successivement.

7. Procédé selon la revendication 5, caractérisé par le fait que l'on traite les mycètes nuisibles, leur habitat ou les végétaux, semences, sol, aires, matériaux ou locaux à protéger contre ces mycètes par 0,005 à 0,5 kg/ha d'un composé Ib selon la revendication 1.

8. Procédé selon la revendication 5, caractérisé par le fait que l'on traite les mycètes nuisibles, leur habitat ou les végétaux, semences, sol, aires, matériaux ou locaux à protéger contre les mycètes, par 0,1 à 5 kg/ha du composé II selon la revendication 1 ou du composé III selon la revendication 1.

9. Utilisation d'un composé Ib selon la revendication 1 pour la préparation des mélanges à activité fongicide synergique selon la revendication 1.

10. Utilisation du composé II selon la revendication 1 pour la préparation des mélanges à activité fongicide synergique selon la revendication 1.

11. Utilisation du composé III selon la revendication 1 pour la préparation des mélanges à activité fongicide synergique selon la revendication 1.